# EUROPEAN PATENT APPLICATION

(11) **EP 4 806 260 A1**
(43) Date of publication of application: **16.09.2026**
(21) Application number: 25162962.2
(22) Date of filing: 11.03.2025
(51) Int. Cl.: A01G 23/00, B66C 23/00

(54) **CRANE ASSEMBLY FOR A FORESTRY VEHICLE**

(71) Applicant: Deere & Company, Moline, IL 61265 (US)
(72) Inventor: VESANEN, PEKKA, 68163 Mannheim (DE)
(74) Representative: Holst, Sönke

(57) **Abstract**

A crane assembly (20) comprises:
a support base (38) mounted on a turntable (28) which is rotatable around a vertical axis;
a first boom (40) pivoted at its proximal end around a first, horizontal axis (42) on the support base (38),
a pivot arm (44) pivoted around the first axis (42) on the support base (38);
a first linear actuator (46) coupled between the support base (38) and the pivot arm (44), adapted to control an inclination of the pivot arm (44) around said first axis (42);
a second linear actuator (58) coupled between the pivot arm (44) and the first boom (40);
a second boom (66) pivoted at the distal end of the first boom (40) around a second axis (68) extending parallel to the first axis (42), the second boom (66) adapted to support a tool (22) at its distal end;
a linkage with an elongated arm (70) having a proximal end pivoted around a third axis (56) on the pivot arm (44) and a distal end pivotally connected by a first connecting arm (72) to the second boom (66) and a second connecting arm (74) pivoted to the first connecting arm (72) and to the first boom (40), the linkage adapted to pivot the second boom (66) around the second axis (68) by actuation of the second linear actuator (58);
wherein the first linear actuator (46) is pivotally supported on the third axis (56).

## Description

The present invention is related to a crane assembly suited in particular for a forestry vehicle, like a forwarder or a harvester.

### Prior Art

Forestry vehicles, like forwarders or harvesters, are provided with tools for handling trees or trunks of trees, like grapples or harvesting heads. The tool is mounted on the outer end of a crane assembly. The crane assembly is supported on the chassis of the vehicle on a turntable and can thus be rotated around the vertical axis and allows to move the tool in a vertical and horizontal direction.

Such a crane assembly is shown in WO 02/45482 A1. On a turntable, a support base is mounted. On the support base, a proximal end of a first boom is pivoted around a first, horizontal axis. On the same axis, a pivot arm is pivoted. The inclination of the pivot arm around said first axis (and thus with respect to the horizontal plane) is controlled by a first linear actuator (hydraulic cylinder) coupled between the support base and the pivot arm. A second linear actuator (hydraulic cylinder) is connected between the pivot arm and the first boom, approximately in the center thereof. At the distal end of the first boom, a second boom is pivoted around a second axis extending parallel to the first axis. At its distal end, the second boom supports the tool directly or indirectly. The second boom can be telescoping or support a telescoping jib on the distal end of which the tool is mounted. A linkage with an elongated arm having a proximal end pivoted on the pivot arm and a distal end pivotally connected by a first connecting arm to the second boom and a second connecting arm pivoted to the first connecting arm and to the first boom allows to pivot the second boom around the second axis by actuation of the second linear actuator, at the same time changing the angle of the first boom around the first axis. All mentioned pivot axes are parallel to each other.

While in the embodiment shown in WO 02/45482 A1 the housing of the first linear actuator is coupled to the support base and the rod is coupled to the pivot arm, in some current production forestry vehicles, the housing is connected to the pivot arm and the rod to the support base, thus the actuator mounted above the pivot arm and not between the pivot arm and the support base as shown in WO 02/45482 A1.

EP 2 116 128 A1 shows another forestry vehicle with two boom arms arranged in a parallelogram manner, with an upper part of the parallelogram built by a third boom holding the tool. An actuator for moving the boom arms with respect to each other is pivoted to the front boom arm in the vicinity of the center thereof and to the rear boom arm at the pivot of a strut connecting the lower ends of both boom arms, where also a lift cylinder for the parallelogram-mounted booms is pivoted.

### Problem

In the prior art of WO 02/45482 A1, the elongated arm and the first linear actuator are pivoted to the pivot arm at different pivot locations with the pivot of the first linear actuator closer to the first axis than the elongated arm. This allows to use a cylinder with a relatively small stroke but requires that different pivot joints are used. In other words, the prior art crane assembly is relatively complex. The latter disadvantage is also found in the mentioned current forestry vehicles with the first cylinder above the pivot arm. The parallelogram arrangement of EP 2 116 128 A1 differs significantly in its general construction from the boom assembly of WO 02/45482 A2.

It is an object of the present invention to overcome or at least reduce one or more of those disadvantages.

### Summary

The present invention is defined by the claims.

A crane assembly comprises:
a support base mounted on a turntable which is rotatable around a vertical axis;
a first boom pivoted at its proximal end around a first, horizontal axis on the support base,
a pivot arm pivoted around the first axis on the support base;
a first linear actuator coupled between the support base and the pivot arm, adapted to control an inclination of the pivot arm around said first axis;
a second linear actuator coupled between the pivot arm and the first boom;
a second boom pivoted at the distal end of the first boom around a second axis extending parallel to the first axis, the second boom adapted to support a tool at its distal end;
a linkage with an elongated arm having a proximal end pivoted around a third axis on the pivot arm and a distal end pivotally connected by a first connecting arm to the second boom and a second connecting arm pivoted to the first connecting arm and to the first boom, the linkage adapted to pivot the second boom around the second axis by actuation of the second linear actuator, at the same time changing the angle of the first boom around the first axis;
wherein the first linear actuator is pivoting around the third axis.

In other words, starting from the crane assembly of WO 02/45482 A1, it is proposed that the axis, around which the first linear actuator is pivoted on the pivot arm, is coaxial with the (third) axis on which the elongated arm of the linkage is pivoted on the pivot arm. Since the forces from the first linear actuator are directly transmitted via (the pivots realizing) the third axis to the elongated arm, and thus not through the pivot arm, the latter can be reduced in size and weight. Separate pivot joints for the first linear actuator and the proximate end of the elongated arm of the linkage are not needed (although they could be used), reducing the complexity, weight and cost of the crane assembly.

### Embodimen

An embodiment of the invention is shown in the drawings, in which:
- Fig. 1: is a schematical view of vehicle in the form of a forestry harvester with a crane assembly,
- Fig. 2: is a side view of the crane assembly of the vehicle of fig. 1, and
- Fig. 3: is a perspective view of the crane assembly of fig. 2

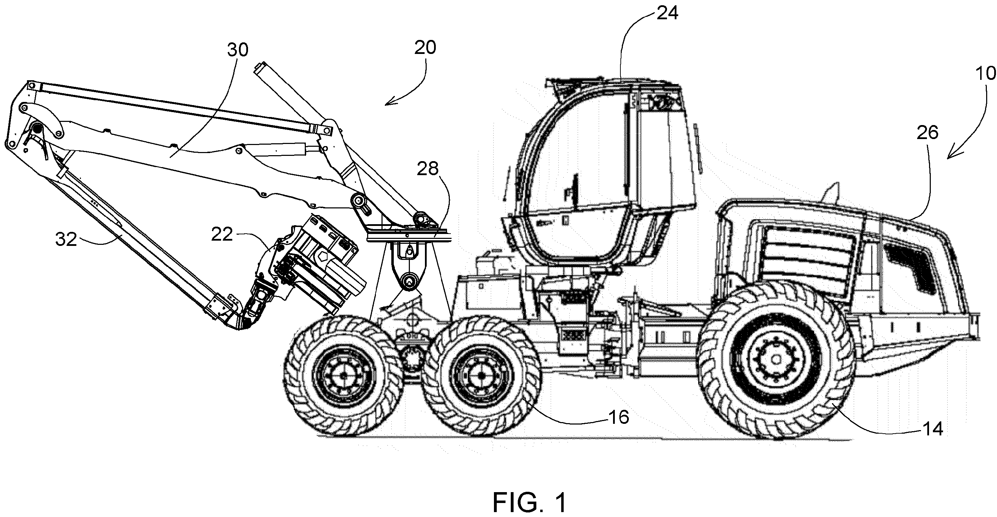

In Fig. 1, an off-road vehicle 10 is shown. The off-road vehicle 10 comprises an articulated chassis 12, supported on ground engaging means in the form of driven front wheels 14 and rear wheels 16. The chassis 12 supports a crane assembly 20 on the distal end of which a tool 22 in the form of a harvester head is mounted. Chassis 12 also supports an operator cabin 24 and an engine compartment 26 with an engine for providing mechanic, electric and/or hydraulic power to driven elements of the vehicle 10. The crane assembly 20 could also be used on a forwarder for forestry use.

The crane assembly 20 comprises a lower part 30 with a proximal end that is rotatably mounted on chassis 12 around a vertical axis at a turntable 28 and an upper part 32 in the form of a telescoping boom or jib.

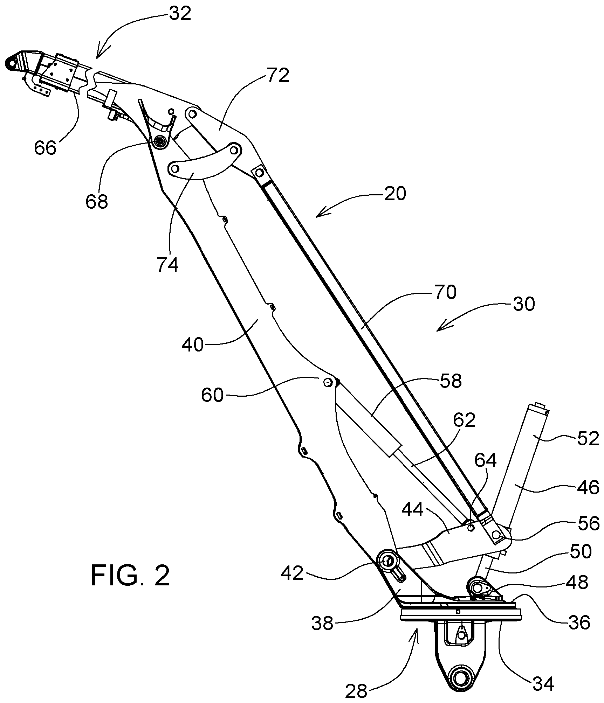

Reference is now made to Fig. 2, showing the crane assembly 20 in more detail. The turntable has a lower part 34 mounted to the chassis 12 and an upper part 36 which can be rotated around a vertical axis with respect to the lower part 34 by an actuator (not shown). On the upper part 36, a flange-like, erected support base 38 is mounted. A first boom 40 is pivoted at its proximal (in the figures: lower) end around a first, horizontal axis 42 on the support base 38. A second boom 66 is pivoted at the distal end of the first boom 40 around a second axis 68 extending parallel to the first axis. The second boom 66 is adapted to support the tool 22 at its distal end. In the embodiment shown, the second boom 66 is telescopable by an actuator (not shown).

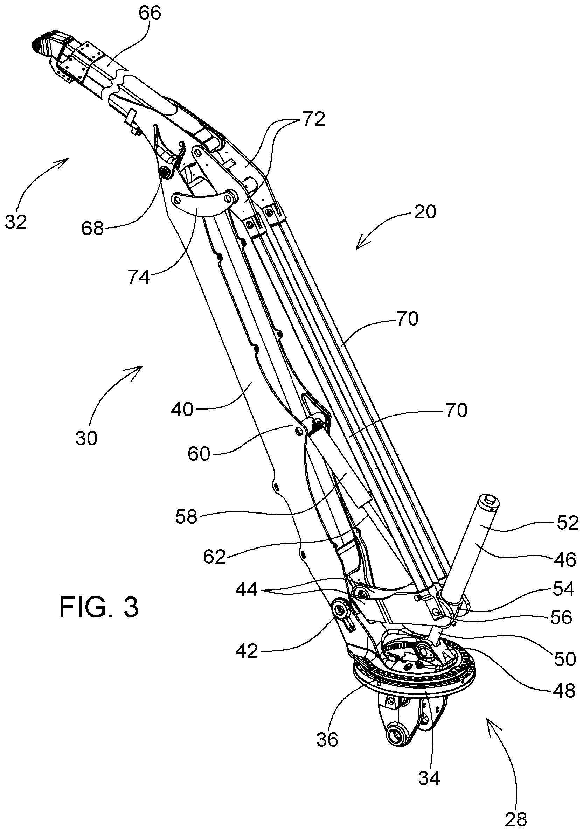

Also, a pivot arm 44 is pivoted around the first axis 42 on the support base 38. A first linear actuator 46 in the form of a hydraulic cylinder is pivotally coupled with its movable output element 50 (rod) to a bracket 48 that is (directly or via the upper part 36 of the turntable 28) mounted to the support base 38. The housing 52 of the first linear actuator 46 is fixed to an elongate support ring 54 (cf. Fig. 3) which on its end is pivotally supported around a third axis 56 on the pivot arm 44. The first linear actuator 46 is thus adapted to control an inclination of the pivot arm 44 around the first axis 42.

A second linear actuator 58 in the form of a hydraulic cylinder is coupled between the pivot arm and the first boom 40. In the embodiment shown, the housing of the second linear actuator 58 is pivotally connected to a protruding area 60 of the first boom 40 and the movable output element 62 of the second linear actuator 58 is pivoted around an axis 64 to the pivot arm 44. Axis 64 is in the vicinity of third axis 56 but offset therefrom in the vertical direction and towards the first boom 40.

A linkage with an elongated arm 70 has a proximal end pivoted around the third axis 56 on the pivot arm 44 and a distal end pivotally connected by a first connecting arm 72 to the second boom 66 and a second connecting arm 74 pivoted to the first connecting arm 72 and to the first boom 40. Both connecting arms 72 and 74 are pivotable on their both ends. The linkage is adapted to pivot the second boom 66 around the second axis 68 when the second linear actuator 58 is actuated, also changing the angle of the first boom 40 around the first axis 42.

All mentioned pivot axes (except the rotation axis of the turntable 28) are parallel to each other and extend transversely to the plane of the drawing in fig. 2.

As described, the first linear actuator 46 and the elongated arm 70 are pivoted on the pivot arm 44 around the same, third pivot axis 56. As shown in Fig. 3, there are two elongated arms 70, two connecting arms 72 and 74 on both sides of the longitudinal symmetry plane of the lower part 30 of the crane assembly 20. The connecting arms 72 can be separate parts or be manufactured as a unitary part, for example as a welding assembly with a transverse connection between both connecting arms 72 shown in the drawings. The elongated arms 70 are supported on the third axis 66 on the outside of the pivot arm 44, which also is composed of two parts on both sides of the longitudinal symmetry plane of the lower part 30 of the crane assembly 20, while the support ring 54 holding the housing 52 of the first linear actuator 46 is supported by the third pivot axis 56 on the inner side of the parts of the pivot arm 44. A pin of the pivot joint making up the third pivot axis 56 thus can at the same time support an elongated arm 70 and the support ring 54.

## Claims

1. A crane assembly (20) comprising:
a support base (38) mounted on a turntable (28) which is rotatable around a vertical axis;
a first boom (40) pivoted at its proximal end around a first, horizontal axis (42) on the support base (38),
a pivot arm (44) pivoted around the first axis (42) on the support base (38);
a first linear actuator (46) coupled between the support base (38) and the pivot arm (44), adapted to control an inclination of the pivot arm (44) around said first axis (42);
a second linear actuator (58) coupled between the pivot arm (44) and the first boom (40);
a second boom (66) pivoted at the distal end of the first boom (40) around a second axis (68) extending parallel to the first axis (42), the second boom (66) adapted to support a tool (22) at its distal end;
a linkage with an elongated arm (70) having a proximal end pivoted around a third axis (56) on the pivot arm (44) and a distal end pivotally connected by a first connecting arm (72) to the second boom (66) and a second connecting arm (74) pivoted to the first connecting arm (72) and to the first boom (40), the linkage adapted to pivot the second boom (66) around the second axis (68) by actuation of the second linear actuator (58);
**characterized in that** the first linear actuator (46) is pivotally supported on the third axis (56).

2. The crane assembly (20) of claim 1, wherein the second boom (66) is telescopable.

3. The crane assembly (20) of claim 1 or 2, wherein the first linear actuator (46) has a housing (52) coupled to the third pivot axis (56) and a movable output element (50) coupled to the support base (38).

4. The crane assembly (20) of claim 3, wherein the housing (52) of the first linear actuator (46) is fixed to an elongate support ring (54) which is pivotally supported around the third axis (56) on the pivot arm (44).

5. The crane assembly (20) of claim 4, wherein the pivot arm (44) is composed of two parts on both sides of the longitudinal symmetry plane of the crane assembly (20), while the support ring (54) holding the housing (52) of the first linear actuator (46) is supported by the third pivot axis (56) on the inner sides of the parts of the pivot arm (44).

6. The crane assembly (20) of claim 5, wherein two elongated arms (70), two first connecting arms (72) and two second connecting arms (74) are provided on both sides of the longitudinal symmetry plane of the crane assembly (20) and the elongated arms (70) are supported on the third axis (66) on the outsides of the parts of the pivot arm (44).

7. The crane assembly (20) of claim 6, wherein a pin of the pivot joint making up the third pivot axis (56) supports the elongated arm (70) and the support ring (54).

8. A vehicle (10) with a crane assembly (20) according to one of the preceding claims.

9. The vehicle (10) of claim 8 in the form of a forwarder or harvester for forestry use.

## Amended claims

### Amended claims in accordance with Rule 137(2) EPC.

1. A crane assembly (20) comprising:
a support base (38) mounted on a turntable (28) which is rotatable around a vertical axis;
a first boom (40) pivoted at its proximal end around a first, horizontal axis (42) on the support base (38),
a pivot arm (44) pivoted around the first axis (42) on the support base (38);
a first linear actuator (46) coupled between the support base (38) and the pivot arm (44), adapted to control an inclination of the pivot arm (44) around said first axis (42);
a second linear actuator (58) coupled between the pivot arm (44) and the first boom (40);
a second boom (66) pivoted at the distal end of the first boom (40) around a second axis (68) extending parallel to the first axis (42), the second boom (66) adapted to support a tool (22) at its distal end;
a linkage with an elongated arm (70) having a proximal end pivoted around a third axis (56) on the pivot arm (44) and a distal end pivotally connected by a first connecting arm (72) to the second boom (66) and a second connecting arm (74) pivoted to the first connecting arm (72) and to the first boom (40), the linkage adapted to pivot the second boom (66) around the second axis (68) by actuation of the second linear actuator (58);
**characterized in that** the first linear actuator (46) has a housing (52) pivotally coupled to the third pivot axis (56) and a movable output element (50) coupled to the support base (38);
that the housing (52) of the first linear actuator (46) is fixed to an elongate support ring (54) which is pivotally supported around the third axis (56) on the pivot arm (44);
and that the pivot arm (44) is composed of two parts on both sides of the longitudinal symmetry plane of the crane assembly (20), while the support ring (54) holding the housing (52) of the first linear actuator (46) is supported by the third pivot axis (56) on the inner sides of the parts of the pivot arm (44).

2. The crane assembly (20) of claim 1, wherein the second boom (66) is telescopable.

3. The crane assembly (20) of claim 1 or 2, wherein two elongated arms (70), two first connecting arms (72) and two second connecting arms (74) are provided on both sides of the longitudinal symmetry plane of the crane assembly (20) and the elongated arms (70) are supported on the third axis (66) on the outsides of the parts of the pivot arm (44).

4. The crane assembly (20) of claim 3, wherein a pin of the pivot joint making up the third pivot axis (56) supports the elongated arm (70) and the support ring (54).

5. A vehicle (10) with a crane assembly (20) according to one of the preceding claims.

6. The vehicle (10) of claim 5 in the form of a forwarder or harvester for forestry use.
